(19) Europäisches Patentamt

European Patent Office

Office européen des brevets

(11) **EP 1 353 057 A1**

(12) **EUROPEAN PATENT APPLICATION**
published in accordance with Art. 158(3) EPC

(43) Date of publication:
**15.10.2003 Bulletin 2003/42**

(51) Int Cl.7: **F02D 41/04**, F02D 13/02, F02F 7/00

(21) Application number: **01983821.8**

(22) Date of filing: **20.11.2001**

(86) International application number:
**PCT/JP01/10114**

(87) International publication number:
**WO 02/057610 (25.07.2002 Gazette 2002/30)**

(84) Designated Contracting States:
**AT BE CH CY DE DK ES FI FR GB GR IE IT LI LU MC NL PT SE TR**

(30) Priority: **19.01.2001 JP 2001011371**

(71) Applicant: **Honda Giken Kogyo Kabushiki Kaisha Minato-ku, Tokyo 107-8556 (JP)**

(72) Inventors:
• **KIKUCHI, Kazunori**
  **Wako-shi, Saitama 351-0193 (JP)**
• **IIJIMA, Satoshi**
  **Wako-shi, Saitama 351-0193 (JP)**
• **SUZUKI, Masatoshi**
  **Wako-shi, Saitama 351-0193 (JP)**

(74) Representative:
**Herzog, Markus, Dipl.-Phys. Dr. et al**
**Weickmann & Weickmann**
**Patentanwälte**
**Postfach 86 08 20**
**81635 München (DE)**

(54) **SPONTANEOUS INTAKE TYPE INTERNAL COMBUSTION ENGINE FOR VEHICLES**

(57)     An internal combustion engine (E) of natural aspiration system for a vehicle operates on the Miller cycle in an operating range covering a no-load operating range and a high-load high-speed operating range at a low fuel consumption rate. The internal combustion engine E has simple, lightweight construction, is capable of being manufactured at a high productivity at a low cost. The internal combustion engine E includes a cylinder (2) provided with a cylinder bore (2a), a piston (8) fitted for reciprocation in the cylinder bore (2a), an inlet valve (35) to be opened and closed at a fixed inlet valve opening point and a fixed inlet valve closing point in the entire operating range covering a no-load operating range and a high-load high-speed operating range, and an exhaust valve (36) to be opened and closed at a fixed exhaust valve opening point and a fixed exhaust valve closing point in the entire operating range. The fixed inlet valve closing point is either a point before the bottom dead center or a point after the bottom dead center, at which intake air sucked into the cylinder (2) reverses through the inlet valve (35), and the internal combustion engine (E) has a set piston displacement which enables the internal combustion engine (E) to generate a maximum required indicated power when the inlet valve (35) is closed at the fixed inlet valve closing point in the high-load high-speed operating range.

Fig.3

## Description

TECHNICAL FIELD

The present invention relates to a Miller-cycle internal combustion engine of natural aspiration system for a vehicle.

BACKGROUND ART

In a known Miller-cycle reciprocating internal combustion engine that operates on the Miller cycle, an inlet valve closing point to close the inlet valve is a point before the bottom dead center, or a point after the bottom dead center, at which intake air that has flowed into the cylinder reverses through the open inlet valve. Compression pressure with a piston at top dead center of the compression stroke (effective compression ratio) in such a Miller-cycle reciprocating internal combustion engine, as compared with that in an Otto-cycle reciprocating internal combustion engine that operates on the Otto cycle, is low, and expansion ratio in the same is equal to that in the Otto-cycle reciprocating internal combustion engine. Therefore, the compression pressure with the piston at the top dead center of compression stroke (effective compression ratio), the expansion ratio is comparatively large as compared with compression ratio, so that the Miller-cycle reciprocating internal combustion engine operates at high thermal efficiency and hence at a low indicated specific fuel consumption. However, since the Miller cycle adjusts the valve closing point to close the inlet valve as mentioned above, the Miller-cycle reciprocating internal combustion engine operates at a low volumetric efficiency. Consequently, the Miller-cycle reciprocating internal combustion engine is unable to generate sufficient power under a high load when the Miller-cycle reciprocating internal combustion engine is used as an automotive internal combustion engine, which is required to operate at widely varying engine speed and under widely varying load. Therefore, some Miller-cycle reciprocating internal combustion engine is provided with a supercharger to increase the weight of air charge and consequent power output and some Miller-cycle reciprocating internal combustion engine operates selectively on the Miller cycle or the Otto cycle.

A reciprocating internal combustion engine disclosed in JP-A 218879/1996 has a cylinder head provided, in addition to an inlet valve and an exhaust valve, with an intake air circulating passage branching from an intake passage, an intake air circulating valve for opening and closing an opening connected t the intake air circulating passage and opening into a combustion chamber. A camshaft for driving the exhaust valve drives the intake air circulating valve, and the phase angle of the camshaft is adjusted by a phase angle varying device. The phase angle varying device adjusts the phase of the camshaft such that the intake air circulating valve remains open after the inlet valve has been closed and the reciprocating internal combustion engine operates on the Miller cycle, in which intake air that has flowed into the cylinder is returned through the intake air circulating passage into the intake passage when the reciprocating internal combustion engine is loaded partially, and adjusts the camshaft such that the intake air circulating valve and the inlet valve are closed simultaneously and the reciprocating internal combustion engine operates on the Otto cycle.

Since this prior art reciprocating internal combustion engine needs the supercharger and the phase angle varying device, the reciprocating internal combustion engine has complicated construction and needs an increased number of parts, the cost of the reciprocating internal combustion engine is high, and the weight of the reciprocating internal combustion engine is large. Since this prior art reciprocating internal combustion engine operates on the Otto cycle when load on the same is large, which reduces the fuel consumption rate reducing effect of the Miller cycle.

The present invention has been made in view of such circumstances and it is therefore an object of the present invention to reduce the fuel consumption rate of an internal combustion engine of natural aspiration system for a vehicle, to be operated in a wide operating range covering a no-load operating range and a high-load high-speed operating range by making the internal combustion engine on the Miller cycle in the entire operating range, to construct the internal combustion engine in simple construction to improve the productivity of a production system for producing the internal combustion engine, and to suppress increase in the cost and weight of the internal combustion engine.

DISCLOSURE OF THE INVENTION

According to the present invention, an internal combustion engine of natural aspiration system for a vehicle comprises: a cylinder provided with a cylinder bore; a piston fitted for reciprocation in the cylinder bore of the cylinder; an inlet valve to be opened and closed at a fixed inlet valve opening point and a fixed inlet valve closing point in an entire operating range covering a no-load operating range and a high-load high-speed operating range; and an exhaust valve to be opened and closed at a fixed exhaust valve opening point and a fixed exhaust valve closing point in the entire operating range; wherein the inlet valve closing point is either a point before the bottom dead center or a point after the bottom dead center, at which intake air sucked into the cylinder reverses through the inlet valve, and the internal combustion engine has a piston displacement which enables the internal combustion engine to generate a maximum required indicated power when the inlet valve is closed at the fixed inlet valve closing point in the high-load high-speed operating range.

The piston displacement of the internal combustion engine according to the present invention for a vehicle is larger than that of a comparable conventional internal combustion engine to generate the maximum required indicated power by operation on the Miller cycle in the high-load high-speed operating range. Since intake air of a volume necessary for generating the maximum required indicated power can be sucked into the internal combustion engine and the internal combustion engine is able to operate on the Miller cycle in the entire wide operating range, in which load and engine speed vary in wide ranges, covering the no-load operating range and the high-load high-speed operating range, the internal combustion engine operates at an indicated specific fuel consumption lower than that at which a comparative internal combustion engine operates partially on the Miller cycle. Since the piston displacement dependent on the diameter of the cylinder bore and the stroke of the piston and necessary for generating the maximum required indicated power, i.e., a maximum required power for driving a vehicle, can be determined by simple construction and does not increase the number of parts, the internal combustion engine can be manufactured at a high productivity, increase in the cost of the internal combustion engine can be suppressed, the weight of the internal combustion engine is smaller than that of the comparable conventional internal combustion engine provided with a supercharger, and hence the internal combustion engine operates at a reduced fuel consumption rate.

In the internal combustion engine of natural aspiration system of the present invention for a vehicle, the maximum required indicated power may be lower than a possible maximum indicated power and may be generated at a second set engine speed lower than a first set engine speed at which the maximum indicated power is generated, and the internal combustion engine may further comprise an engine speed sensor for measuring engine speed, and a power reducing means for reducing the output power of the internal combustion engine when an engine speed measured by the engine speed sensor is higher than the second set engine speed.

Thus, the maximum required indicated output is lower than the maximum indicated power that can be generated by the internal combustion engine, and the output reducing means is controlled according to engine speed measured by the engine speed sensor to control the output of the internal combustion engine so that the maximum required indicated power lower than the maximum indicated power is generated at an optional engine speed. Therefore, the degree of freedom of determining the maximum required indicated power is increased, and an optimum maximum required indicated power can be determined according to the purpose of the internal combustion engine and a maximum load exerted on the internal combustion engine without increasing the cost and the weight of the internal combustion engine. Accordingly, the internal combustion engine can be applied to various types of vehicles, and vehicles with this internal combustion engine mounted thereon can be manufactured at reduced costs.

Even when the internal combustion engine operates on the Miller cycle, the maximum required indicated output can be generated at the second set engine speed lower than an engine speed at which a comparable internal combustion engine which operates on the Otto cycle generates a maximum required indicated power coinciding with a maximum indicated power because the maximum required indicated power is lower than the maximum indicated power which can be generated by the internal combustion engine. Consequently, frictional power loss which is lost when the maximum required indicated power is generated can be reduced, net indicated power can be increased, and brake specific fuel consumption can be reduced.

In the internal combustion engine of natural aspiration system of the present invention, a rotor included in an alternator, and a starting clutch provided with centrifugal weights may be mounted on a crankshaft included in the internal combustion engine.

Thus, the rotor of the alternator, and the rotating member of the starting clutch serve as an additional revolution inertia weight (flywheel) and hence the variation of rotation of the crankshaft can be suppressed at comparatively low engine speeds and the internal combustion engine is able to operate smoothly.

BRIEF DESCRIPTION OF THE DRAWINGS

Fig. 1 is a fragmentary sectional view of an internal combustion engine in a preferred embodiment of the present invention;
Fig. 2 is a sectional view taken on line II-II in Fig. 1; and
Fig. 3 is a graph showing curves of assistance in explaining the relation between the indicated power and the engine speed of the internal combustion engine shown in Fig. 1.

BEST MODE FOR CARRYING OUT THE INVENTION

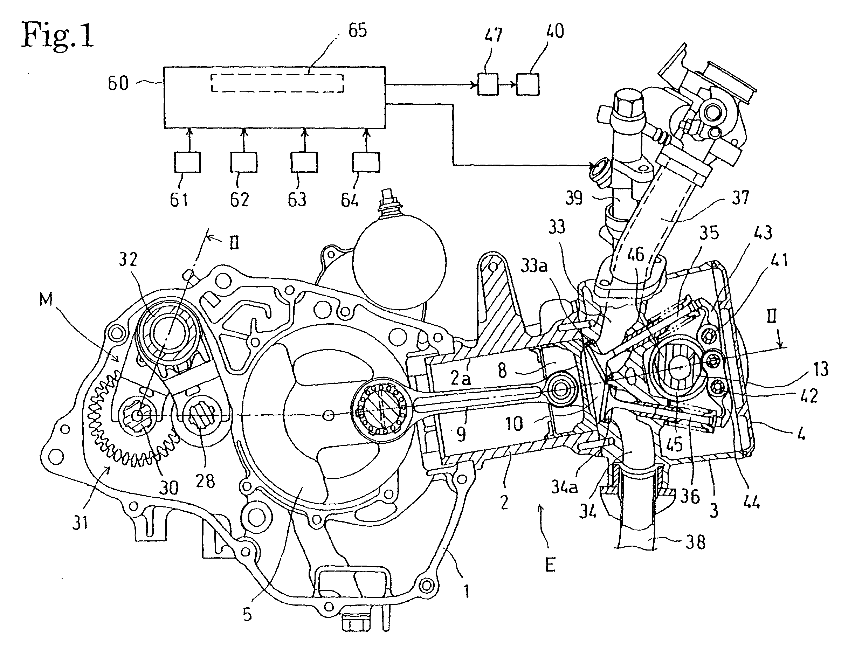

An internal combustion engine in a preferred embodiment of the present invention will be described with reference to Figs. 1 to 3.

An internal combustion engine E of natural aspiration system is a water-cooled, overhead camshaft type single-cylinder reciprocating internal combustion engine of natural aspiration system intended to be mounted on a motorcycle. The internal combustion engine E is combined with a transmission unit including a transmission clutch C2 and a manual transmission M to form a power unit. In this specification, words, "right", "left", "front" and "rear" and the like words signify positional and directional attributes with respect to the direction of forward travel of the motorcycle.

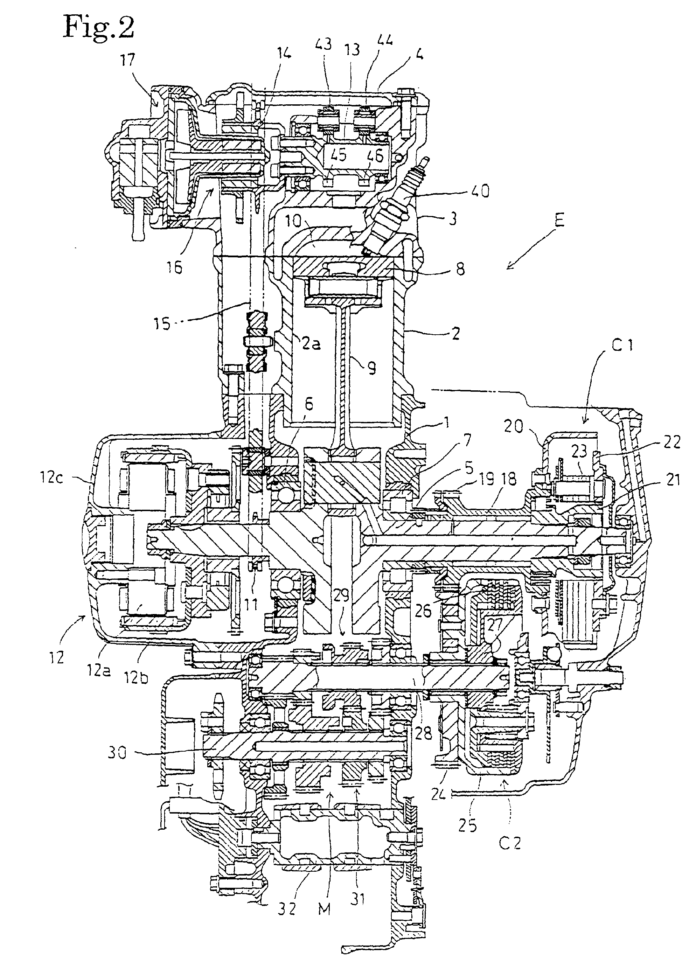

Referring to Figs. 1 and 2, the internal combustion engine E has an engine body formed by fastening a cylinder 2 provided with a cylinder bore 2a to a crankcase 1, which can be divided into right and left cases, fastening a cylinder head 3 to the upper end of the cylinder 2, and covering the cylinder head 3 with a cylinder head over 4. The axis of the cylinder bore 2a is tilted forward so as to extend obliquely upward. A crankshaft 5 is supported for rotation in main bearings 6 and 7, i. e., ball bearings, on the crankcase 1. A piston 8 is fitted for reciprocation in the cylinder bore 2a and is connected to the crankshaft 5 by a connecting rod 9. The piston 8 is reciprocated by combustion pressure produced in a combustion chamber 10 formed between the piston 8 and the cylinder head 3 to rotate the crankshaft 5.

A drive sprocket 11 and an alternator 31 are mounted in that order from right to left on a left end part extending to the left from the main bearing 8 of the crankshaft 5. The drive sprocket 11 is fixed to the crankshaft 5. A camshaft 13 is supported for rotation on the cylinder head 3 and a cam sprocket 14 is fixedly mounted on the camshaft 13. A timing chain 15 is extended between drive sprocket 11 and the cam sprocket 14 to drive the camshaft 13 for rotation at a rotating speed equal to half the rotating speed of the crankshaft 5. A water pump 17 is operatively connected to a left end part of the camshaft 13 by a magnetic coupling 16 provided with a permanent magnet. The alternator 12 has a stator 12a fixed to a generator cover 12c, and a cup-shaped rotor 12b fixedly mounted on the crankshaft 5 so as t surround the stator 12a.

A tubular connecting member 18 is mounted for rotation on a right end part extending to the right from the main bearing 7 of the crankshaft 5 coaxially with the crankshaft 5. A primary drive gear 19 is formed integrally with a left end part of the connecting member 18 on the side of the main bearing 7. The right end part of the connecting member 18 is fastened to an outer member 20 of a starting clutch C1 of a centrifugal type. The starting clutch C1 comprises the outer member 20, an inner member 21 fastened to the crankshaft 5, and a plurality of centrifugal weights 23. The centrifugal weights 23 are supported for swing motion on a plate 22 fastened to the inner member 21. The starting clutch C1 is engaged when the engine speed exceeds a predetermined level. Upon the increase of the engine speed beyond the predetermined level, the centrifugal weights 23 are pressed against the outer member 20 by centrifugal to engage the starting clutch C1. The centrifugal weights 23 of the starting clutch C1 are greater and heavier than those of an ordinary, equivalent centrifugal clutch employed in the conventional internal combustion engine in order that the starting clutch C1 has a clutch capacity capable of surely transmitting torque even while the engine speed of the internal combustion engine 1 is low.

A primary driven gear 24 engaged with a primary drive gear 21 is mounted on a main shaft 28 of the manual transmission M, i.e., a constant-mesh transmission. The primary driven gear 24 is operatively connected by a damping member to an outer member 25 of a transmission clutch C2 mounted on a right end part of the main shaft 28 projecting to the right from the crankcase 1. The transmission clutch C2 is a multiple disk friction clutch including a plurality of fiction disks 26. The transmission clutch C2 is engaged and disengaged by manually operating a release mechanism. When the transmission clutch C2 is engaged by frictionally engaging the plurality of friction disks 26 by the resilience of clutch springs, the torque of the crankshaft 5 is transmitted through the outer member 25 of the transmission clutch C2 to an inner member 27 of the same fixedly mounted on the main shaft 28. When the transmission clutch C2 is disengaged by removing the pressure applied to the friction disks 26 by the clutch springs from the friction disks 26, the outer member 25 of the transmission clutch C2 is disconnected from the inner member 27 of the same to stop transmitting the torque from the outer member 25 to the inner member 27.

The manual transmission M is disposed behind the crankshaft 5 in the crankcase 1. The manual transmission M includes the main shaft 28, main gears 29 mounted on the main shaft 28, a countershaft 30, and counter gears 31 mounted on the countershaft 30. A shift drum 32 is turned by operating a transmission operating mechanism, not shown, to move a shift fork supported on a support shaft and engaged in a cam groove formed in the shift drum 32 in a lateral direction so that selected one of the main gears 29 and one of the counter gears 31 corresponding to the selected main gear are engaged to set the manual transmission M in a desired speed.

The torque of the crankshaft 5 is transmitted through the starting clutch C1, the primary drive gear 19, a primary reduction mechanism including the primary drive gear 19 and the primary driven gear 24 and the transmission clutch C2 to the manual transmission M. Torque of the counter shaft 30 rotating at a rotating speed determined by the manual transmission M is transmitted through a secondary reduction gear mechanism, not shown, to the rear wheels to drive the rear wheels for rotation.

Referring to Fig. 1, the cylinder head 3 defining the combustion chamber 10 together with the piston 8 is provided with an inlet port 33 and an exhaust port 34 respectively opening into the combustion chamber 10. An inlet valve 35 and an exhaust valve 36 are inserted in the inlet port 33 and the exhaust port 34 to open and close the inner open end 33a of the inlet port 33 and the inner open end 34a of the exhaust port 34, respectively. An intake pipe 37 is connected to a part of a side surface of the cylinder head 3 provided with an opening connected to the inlet port 33. Air flows at a flow rate controlled by a throttle valve, not shown, through the intake pipe 37. A fuel injection valve 39 is connected to the intake pipe 37 to produce an air-fuel mixture by jetting a fuel toward the inlet port 33a. An exhaust pipe 38 is connected to a part of a side surface of the cylinder head 3 provided with an opening connected to the exhaust port 34. Two spark plugs 40, only one of which is shown in Fig. 2, are screwed in the cylinder head 3 to ignite the air-fuel mixture supplied into the combustion chamber 10.

An inlet rocker shaft 41 and an exhaust rocker shaft 42 are fixedly held on the cylinder head 3. An inlet rocker arm 43 and an exhaust rocker arm 44 are supported for turning on middle parts of the inlet rocker shaft 41 and the exhaust rocker shaft 42, respectively. Rollers are supported for rotation on driven ends of the inlet rocker arm 43 and the exhaust rocker arm 44 and are engaged with inlet valve operating cam 45 and an exhaust valve operating cam 46 formed integrally with the camshaft 13, respectively. The working ends of the inlet rocker arm 43 and the exhaust rocker arm 44 are in contact with the free ends of the stems of the inlet valve 35 and the exhaust valve 36, respectively. The inlet valve operating cam 45 and the exhaust valve operating cam 46 drive the inlet rocker arm 43 and the exhaust rocker arm 44 to move the inlet valve 35 and the exhaust valve 36 by a predetermined lift at predetermined time points in synchronism with the rotation of the crankshaft 5. The camshaft 13, the inlet rocker arm 43, the exhaust rocker arm 44, the inlet rocker shaft 41 and the exhaust rocker shaft 42 constitute a valve mechanism.

The timing of operation of the inlet valve 35 and the exhaust valve 36 is fixed for the entire operating range of the internal combustion engine E covering a no-load operating range and a high-load high-speed operating range in which the throttle valve is fully opened. A set inlet valve opening point when the inlet valve 35 is opened is before the top dead center of the exhaust stroke, so that the opening operations of the inlet valve 35 and the exhaust valve 36 overlap. A set inlet valve closing point when the inlet valve 35 is closed is before the bottom dead center of the suction stroke or at the initial stage of the compression stroke after the bottom dead center of the suction stroke, so that intake air sucked into the cylinder bore 2a reverses through the inlet port 33a into the inlet port 33 above the inlet valve 35. A set exhaust valve opening point is before the bottom dead center of the expansion stroke, and a set exhaust valve closing point is after the top dead center of the suction stroke. The engine E, which operates in the operating range covering the no-load operating range and the high-load high-speed range, operates on the Miller cycle in the entire operating range. The set inlet valve closing point is determined properly so that the internal combustion engine E is able to generate a maximum required indicated power PR, taking into consideration power consumption rate and the like.

The set piston displacement V of the internal combustion engine E dependent on the diameter of the cylinder bore 2a and the stroke of the piston 8 is larger than a minimum piston displacement $V_0$ which enable the suction of an intake air volume necessary for generating the maximum required indicated power PR, i.e. a maximum indicated power, necessary for driving the motorcycle, provided that the inlet valve 35 and the exhaust valve 36 are opened and closed at the foregoing valve opening points and valve closing points, respectively, in the entire operating range of the internal combustion engine E covering the no-load operating range and the high-load high-speed operating range.

The minimum piston displacement $V_0$ is larger than the piston displacement of a comparable, conventional reciprocating internal combustion engine, which is provided with an inlet valve and an exhaust valve which are opened and closed at fixed valve opening and fixed valve closing points in the entire operating range, the inlet valve closing point is after the bottom dead center of the suction stroke so that the intake air reverses scarcely from the cylinder bore into the inlet port, and generates a maximum indicated power (maximum value of indicated power) equal to the maximum required indicated power (hereinafter, referred to as "equivalent Otto-cycle engine"). The internal combustion engine E has such a minimum piston displacement because the inlet valve 35 of the internal combustion engine E is operated in an advanced closing mode in which the inlet valve 35 is closed at a point before the bottom dead center or in a delayed closing mode in which the inlet valve 35 is closed at a point after the bottom dead center and hence the volumetric efficiency of the internal combustion engine E is lower than that of the equivalent Otto-cycle engine. Thus, internal combustion engine E needs the increased piston displacement to compensate for the shortage of the intake air volume due to the reduced volumetric efficiency and to produce additional power for compensating for an increased mechanical power loss resulting from increase in piston displacement. The minimum piston displacement $V_0$ is determined by the following procedure.

In the equivalent Otto-cycle engine,

$$Q_1 = V_{1 *} \eta \qquad (1)$$

where $V_1$ (m³) is piston displacement, $\eta_1$ is volumetric efficiency, and $Q_1$ (m³) is an intake air volume necessary for generating the maximum indicated power, which is equal to the maximum required indicated power.

In an internal combustion engine that operates on the Miller cycle,

$$V_2 = Q_1/\eta_2 = V_{1 *} (\eta_1/\eta_2) \qquad (2)$$

where $V_2$ (m³) is piston displacement necessary for sucking intake air by intake air volume $Q_1$, and $\eta_2$ is volumetric efficiency.

In the equivalent Otto-cycle engine,

$$P_{mf1} = 120 * P_{sf1}/(N*V_1) \qquad (3)$$

where $P_{sf}$ (kW) is mechanical power loss, $p_{mf1}$ (kPa) is frictional mean effective pressure, and N is engine speed.

In the internal combustion engine having the piston displacement $V_2$,

$$P_{sf2} = p_{mf1} * N * V_2/120 \qquad (4)$$

where $P_{sf2}$ is mechanical power loss in the internal combustion engine. Therefore,

$$P_{sf} = P_{sf2} - P_{sf1} \qquad (5)$$

where $P_{sf}$ (kW) is mechanical power loss resulting from increase in the piston displacement.

When the throttle valve of the equivalent Otto-cycle engine is fully opened,

$$P_{me1} = 120 * P_{s1}/(N*V_1) \qquad (6)$$

where $P_{me1}$ (kPa) is the mean effective pressure and $P_{s1}$ (kW) is the indicated power of the equivalent Otto-cycle engine. Then,

$$V_f = 120 * P_{sf}/(N*P_{me1}) \qquad (7)$$

where $V_f$ ($m^3$) is a supplementary piston displacement for compensating for power reduction caused by increase in mechanical power loss.

Therefore, the minimum piston displacement $V_0$ ($m^3$) is expressed by:

$$V_0 = V_2 + V_f \qquad (8)$$

An increment in the mechanical power loss resulting from the increase of the piston displacement by the supplementary piston displacement $V_f$ is negligibly small.

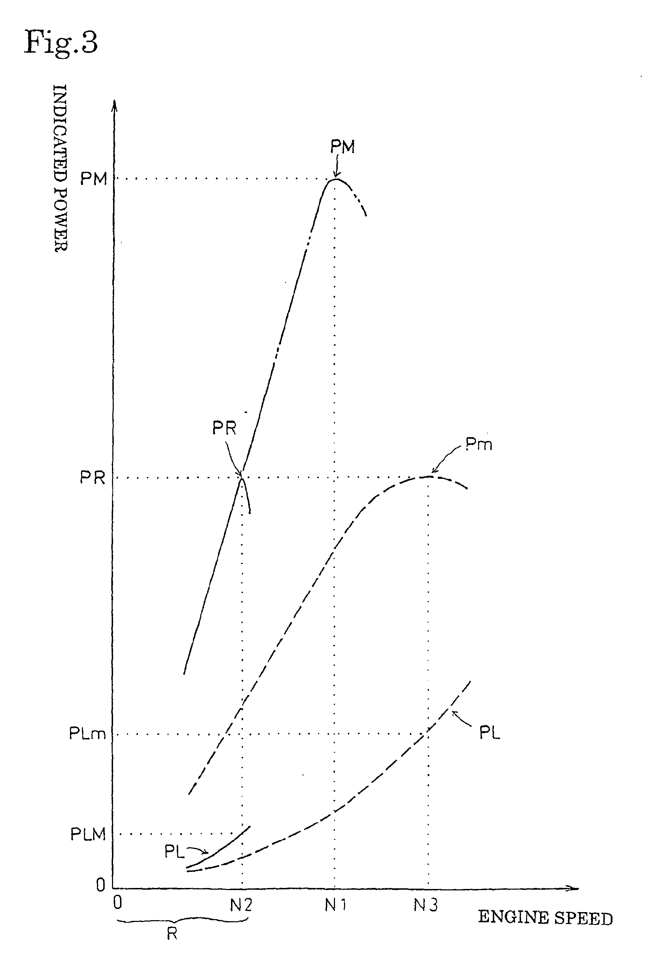

The set piston displacement V of the internal combustion engine E in this embodiment is larger than the minimum piston displacement $V_0$ larger than that of the equivalent Otto-cycle engine, and the maximum indicated power PM (Fig. 3) of the internal combustion engine E which operates on the Miller cycle with the inlet valve 35 and the exhaust valve 36 operated for opening and closing at the foregoing set points is dependent on data on the internal combustion engine E including the sizes of the passages of the intake system and the exhaust system, the lifts and diameters of the inlet valve 35 and the exhaust valve 36 and compression ratio, and a power reducing device 65 determines the maximum required indicated power PR lower than the maximum indicated power PM. The set piston displacement V of the internal combustion engine E is larger than the piston displacement of the equivalent Otto-cycle engine, and the second set engine speed N2 at which the maximum required indicated power equal to the maximum indicated power of the equivalent Otto-cycle engine is lower than an engine speed at which the equivalent Otto-cycle engine generates the maximum indicated power.

An electronic control unit (ECU) 60 for controlling fuel injection quantity and ignition timing receives signals representing data on the operating condition of the internal combustion engine E from sensors including an engine speed sensor 61 for measuring engine speed, a throttle opening sensor 62 for measuring the opening of the throttle valve, a pressure sensor 63 for measuring boost pressure at a position below the throttle valve, and a temperature sensor 64 for measuring the temperature of the cooling water or the exhaust gas. The electronic control unit 60 controls the fuel injection valve 39 to inject the fuel at a proper fuel injection rate according to the operating condition of the internal combustion engine E, and an ignition coil 47 to generate a high voltage on the basis of those signals. The two spark plugs 40 ignite the air-fuel mixture in appropriate ignition timing determined according to the operating condition of the internal combustion engine E.

The relation between indicated power and engine speed when the internal combustion engine E is operating with the throttle valve fully opened will be described with reference to Fig. 3. The internal combustion engine E having the set piston displacement V larger than the minimum piston displacement $V_0$ expressed by Expression (8) has an output characteristic represented by an output characteristic curve indicated by a continuous line and a two-dot chain line to generate the maximum indicated power PM at the first set engine speed N1.

In the internal combustion engine E having the output characteristic to generate the maximum indicated power PM at the first set engine speed N1, the power reducing device 65, which executes a series of operations in the electronic control unit 60, provides a signal to stop driving the fuel injection valve 39 to reduce the power of the internal combustion engine E by stopping the injection of fuel by the fuel injection valve 39, when the throttle opening sensor 62 detects a fully opened state of the throttle valve and an engine speed measured by the engine speed sensor 61 exceeds the second set engine speed N2, which is, for example, 2/3 of the first set engine speed N1, in order that the maximum required indicated power PR may be generated at the second set engine speed N2. The second set engine speed N2 lower than the first set engine speed N1 is determined so that the maximum required indicated power PR required by the type of the vehicle equipped with the internal combustion engine E and a maximum load that may be exerted on the internal combustion engine E may be generated.

The operation and effects of the internal combustion engine E will be described. Shown also in Fig. 3 to facilitate understanding is an output characteristic curve indicated by a broken line and representing the output characteristic of the equivalent Otto-cycle engine having a piston displacement smaller than the set piston displacement V of the internal combustion engine E and capable of generating the maximum indicated power Pm equal to the maximum required indicated power PR.

Generally, part of power generated by the internal combustion engine is dissipated in a mechanical power loss including a frictional power loss resulting from mechanical friction between the moving parts including the crankshaft, the crankpin, the piston and the valve mechanism, and an accessory driving power loss resulting from driving the accessories including the oil pump and the alternator. Therefore, the net power of the internal combustion engine is equal to the remainder of subtraction of the mechanical power loss from the indicated power. Since the mechanical power loss increases with the increase of engine speed, the mechanical power loss increases together with the indicated power which increases with the increase of engine speed to the maximum indicated power.

The second set engine speed N2, at which the internal combustion engine E generates the maximum required indicated power PR, is lower than the engine speed N3 at which the equivalent Otto-cycle engine generates the maximum indicated power Pm. Accordingly, the mechanical power loss PLM when the internal combustion engine E generates the maximum required indicated power PR is smaller than the mechanical power loss PLm when the equivalent Otto-cycle engine generates the maximum indicated power Pm. The mechanical power loss in the internal combustion engine E is smaller than that in the equivalent Otto-cycle engine for the same indicated power. The moving parts of the internal combustion engine E generating the mechanical power loss and those of the equivalent Otto-cycle engine are the same, and the accessories of the internal combustion engine E generating the auxiliary driving loss and those of the equivalent Otto-cycle engine are the same.

Since the internal combustion engine E mounted on the motorcycle has the set piston displacement V larger than the minimum piston displacement $V_0$ larger than the piston displacement of the equivalent Otto-cycle engine to generate the maximum required indicated power PR while the internal combustion engine E is operating on the Miller cycle in the high-load high-speed range. Therefore, an intake air volume necessary for generating the maximum required indicated power PR can be taken in and the internal combustion engine E operates on the Miller cycle in the entire wide operating range, in which load and engine speed varies widely, including the no-load operating range and the high-load high-speed operating range. Thus, the internal combustion engine E operates at a low indicated specific fuel consumption as compared with an internal combustion engine which operates on the Miller cycle only in a part of the operating range.

A structural configuration for a greater piston displacement dependent on the diameter of the cylinder bore 2a and the stroke of the piston 8 to generate the maximum required indicated power, i.e., a maximum power necessary for driving the motorcycle, in the high-load high-speed operating range is simple and does not need additional parts. Therefore, the internal combustion engine E can be manufactured at a high productivity without needing additional cost. The internal combustion engine E having a weight smaller than that of a comparable internal combustion engine provided with a supercharger operates at a comparatively low fuel consumption rate.

Since the output reducing device 65 reduces the power of the internal combustion engine E when the engine speed measured by the engine speed sensor 61 exceeds the second set engine speed N2, the maximum required indicated power PR lower than the maximum indicated power PM can be generated at an optional engine speed below the first set engine speed N1 by properly determining the second set engine speed N2. Thus, the degree of freedom of setting the maximum required indicated power is increased and an optimum maximum required indicated power PR can be readily determined according to the type of a vehicle on which the internal combustion engine E is to be mounted and a maximum load that may be exerted on the internal combustion engine E without increasing the cost and weight. Therefore, the internal combustion engine E can be used in combination with different types of motorcycles and hence the motorcycles can be manufactured at comparatively low costs.

Since the increased, set piston displacement V of the internal combustion engine E is determined such that the maximum required indicated power PR lower than the maximum indicated power PM that can be generated by the internal combustion engine E, the second set engine speed N2, at which the internal combustion engine E operating on the Miller cycle generates the maximum required indicated power PR, is lower than the engine speed N3 at which the equivalent Otto-cycle engine generates the maximum required indicated power equal to the maximum indicated power Pm. In the internal combustion engine E which is capable of generating the maximum indicated power PM at the first set engine speed N1, the output reducing device 65 operates so that the maximum required indicated power PR is generated when the engine speed of the internal combustion engine E exceeds the second set engine speed N2 below the first set engine speed N1. The second set engine speed N2 at which the internal combustion engine E generates the maximum required indicated power PR is lower than the engine speed N3 at which the equivalent Otto-cycle engine generates the maximum indicated power Pm, and the mechanical power loss included in the maximum required indicated power PR is smaller than that in the equivalent Otto-cycle engine. Therefore, even if the internal combustion engine E is operated in the high-speed range in the entire operating range R, the mechanical power loss PL in the indicated power is smaller than that in the equivalent Otto-cycle engine and the net indicated power increased accordingly. Thus the brake specific fuel consumption is comparatively low and the internal combustion engine E operates at a low brake specific fuel consumption in an operating mode in which the internal combustion engine E is operated frequently in the high-speed operating range.

The starting clutch C1 provided with the centrifugal weights 23, and the rotor 12b of the alternator 12 mounted on the crankshaft 5 serve as an additional revolution inertia weight (flywheel) added to the crankshaft 5. Thus, the variation of rotation of the crankshaft 5 rotating at a comparatively low rotating speed can be suppressed and the internal combustion engine E is able to operate smoothly. Since the internal combustion engine E, as compared with the equivalent Otto-cycle engine, operates in a comparatively low speed range, the starting clutch CI is larger than that of the equivalent Otto-cycle engine or the centrifugal weights 23 of the starting clutch C1 are heavier than those of the equivalent Otto-cycle engine to ensure power transmission while the crankshaft 5 is rotating at a low rotating speed. Consequently, the crankshaft 5 has an increased revolution inertia weight and hence the variation of rotation can be further effectively suppressed.

The internal combustion engine E, in which the output reducing device 65 stops the supply of fuel to the fuel injection valve when the engine speed exceeds the second set engine speed N2, as compared with an internal combustion engine in which the output power is reduced by controlling ignition timing, operates at a comparatively low fuel consumption rate.

The following changes are possible in the foregoing internal combustion engine E in the preferred embodiment.

The output reducing device 65 may reduce the power of the internal combustion engine E by reducing fuel injection quantity instead of by stopping the supply of fuel to the fuel injection valve 39. The output reducing device 65 may reduce the power of the internal combustion engine E by greatly delaying or advancing ignition timing with respect to optimum ignition timing, by stopping ignition or by reducing ignition frequency.

The set piston displacement V of the internal combustion engine E may be equal to the minimum piston displacement $V_0$ instead of larger than the minimum piston displacement $V_0$. When the set piston displacement V is equal to the minimum piston displacement $V_0$,

the maximum required indicated power PR coincides with the maximum indicated power PM. Since the maximum required indicated power PR is dependent on data on the internal combustion engine E including the sizes of the passages of the intake system and the exhaust system, the lifts and diameters of the inlet valve 35 and the exhaust valve 36 and compression ratio, the output reducing device 65 may be omitted.

Although the internal combustion engine E embodying the present invention has been described as applied to the motorcycle, the internal combustion engine of the present invention may be applied to various vehicles other than motorcycles and may be a multi-cylinder internal combustion engine.

**Claims**

1. An internal combustion engine of natural aspiration system for a vehicle, comprising:

   a cylinder provided with a cylinder bore;
   a piston fitted for reciprocation in the cylinder bore of the cylinder;
   an inlet valve to be opened and closed at a fixed inlet valve opening point and a fixed inlet valve closing point in an entire operating range covering a no-load operating range and a high-load high-speed operating range; and
   an exhaust valve to be opened and closed at a fixed exhaust valve opening point and a fixed exhaust valve closing point in the entire operating range;

   wherein the fixed inlet valve closing point is either a point before the bottom dead center or a point after the bottom dead center, at which intake air sucked into the cylinder reverses through the inlet valve, and the internal combustion engine has a set piston displacement which enables the internal combustion engine to generate a maximum required indicated power when the inlet valve is closed at the fixed inlet valve closing point in the high-load high-speed operating range.

2. The internal combustion engine of natural aspiration system according to claim 1, wherein the maximum required indicated power is lower than a possible maximum indicated power and is generated at a second set engine speed lower than a first set engine speed at which the maximum indicated power is generated, and the internal combustion engine further comprises an engine speed sensor for measuring engine speed, and a power reducing means for reducing the output power of the internal combustion engine when an engine speed measured by the engine speed sensor is higher than the second set engine speed.

**3.** The internal combustion engine of natural aspiration system according to claim 1, wherein a rotor included in an alternator, and a starting clutch provided with centrifugal weights are mounted on a crankshaft included in the internal combustion engine.

# Fig.1

EP 1 353 057 A1

# Fig.2

Fig.3

# EP 1 353 057 A1

## INTERNATIONAL SEARCH REPORT

| | International application No. |
|---|---|
| | PCT/JP01/10114 |

**A. CLASSIFICATION OF SUBJECT MATTER**
Int.Cl⁷ F02D41/04, F02D13/02, F02F7/00

According to International Patent Classification (IPC) or to both national classification and IPC

**B. FIELDS SEARCHED**

Minimum documentation searched (classification system followed by classification symbols)
Int.Cl⁷ F02D41/04, F02D13/02, F02F7/00

Documentation searched other than minimum documentation to the extent that such documents are included in the fields searched
Jitsuyo Shinan Koho          1926-1996     Toroku Jitsuyo Shinan Koho    1994-2002
Kokai Jitsuyo Shinan Koho    1971-2002     Jitsuyo Shinan Toroku Koho    1996-2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 10-103123 A (YANMAR AGRICULTURAL EQUIPMENT CO., LTD.), 21 April, 1998 (21.04.1998), Par. Nos. [0004], [0009] to [0012]; Fig. 3   (Family: none) | 1-3 |
| Y | JP 59-215962 A (Suzuki Motor Co., Ltd.), 05 December, 1984 (05.12.1984), page 2, lower left column, line 11 to page 3, upper left column, line 13   (Family: none) | 1-3 |
| Y | US 005931124 A (Martin Kerkau), 03 August, 1999 (03.08.1999), Fig.7 & JP 10-61458 A     & EP 000814237 A | 1-3 |
| Y | JP 2001-12298 A (Honda Motor Co., Ltd.), 16 January, 2001 (16.01.2001), Par. Nos. [0033], [0057]; Fig. 3 (Family: none) | 3 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 February, 2002 (12.02.02) | 26 February, 2002 (26.02.02) |

| Name and mailing address of the ISA/ | Authorized officer |
|---|---|
| Japanese Patent Office | |
| Facsimile No. | Telephone No. |

Form PCT/ISA/210 (second sheet) (July 1992)

13